# EUROPEAN PATENT SPECIFICATION

(11) **EP 4 077 043 B1**
(45) Date of publication and mention of the grant of the patent: **21.08.2024**
(21) Application number: 20842196.6
(22) Date of filing: 04.12.2020
(51) Int. Cl.: B60P 1/00, B60P 1/16

(54) **DUMPING-BODY ASSEMBLY FOR USE IN A HAULAGE VEHICLE**
STOSSFÄNGERANORDNUNG ZUR VERWENDUNG IN EINEM TRANSPORTFAHRZEUG
ENSEMBLE BENNE BASCULANTE DESTINÉ À ÊTRE UTILISÉ DANS UN VÉHICULE DE HALAGE

(30) Priority: 20.12.2019 GB 201919023
(43) Date of publication of application: 26.10.2022
(73) Proprietor: Caterpillar SARL, 1208 Geneva (CH)
(72) Inventor: LOWERSON, Julian, 1208 Geneva (CH); STOKER, Mark, Jonathan, 1208 Geneva (CH); PERCIVAL, John, 1208 Geneva (CH)
(74) Representative: Novagraaf Group
(86) International application number: PCT/EP2020/025560
(87) International publication number: WO 2021/121657

(56) References cited:
- EP-A1- 2 090 461
- CN-U- 206 870 921
- DE-B- 1 220 747
- US-A- 3 827 753
- US-A- 5 456 521
- US-A1- 2014 159 466
- US-A1- 2019 291 623

## Description

### Background

Embodiments of the present disclosure relate to a dumping-body assembly for use in a haulage vehicle, particularly a dump truck, and to a haulage vehicle which is equipped with such a dumping-body assembly.

Haulage vehicles, such as dump trucks, are widely used among different industries and haulage applications, such as mines, construction sites and landfills. Typically, such vehicles are employed for receiving, transporting and selectively unloading payloads at a site of delivery. For doing so, such vehicles usually comprise an actuatable payload container, also referred to as a body, a truck bed or a hopper.

Basically, known payload container assemblies may be divided into two different groups, namely rear dump body arrangements and rear eject body arrangements, based on how they are operated and actuated for unloading a received payload.

In rear dump body arrangements, e.g. as used in dump trucks, a dump body is pivotably mounted to a carrier of a vehicle. Hydraulic rams are employed for pivoting the dump body into an inclined unloading position allowing material received in the dump body to be deposited or dumped. In other words, for unloading the payload in such an arrangement, the dump body is pivoted upwardly around a hinge-coupled end such that the payload received in the dump body slides out due to gravity. For ensuring proper unloading of the payload, i.e. that sufficiently high downhill-slope forces are applied to the payload, known dump body arrangements are configured to pivot dump bodies upwardly by at least 60° in order to position the dump body from a horizontal stowage position into an inclined unloading position.

However, pivoting the dump body upwardly to such an extent may substantially raise the centre of gravity of the vehicle, thereby affecting stability and operational safety during operation. This particularly may cause hazards when the vehicle is subjected to soft or inclined truck underfoot conditions. Further, when such vehicles are employed in applications having limited overhead clearance, such as in a tunnel, under trees, bridges or wires, it may not be ensured that the dump body can be pivoted upwardly to a sufficient extent required for properly unloading the payload.

In contrast, known rear eject body arrangements are equipped with a payload container in which an ejector or blade is horizontally moved so as to eject and dump the payload received therein. Accordingly, for unloading the payload, it is not required that the payload container is raised or pivoted. Accordingly, such eject body arrangements may be particularly suited for haulage applications having a limited overhead clearance. However, since the payload container is maintained in a horizontal position when being unloaded, the ejector needs to be actuated with high actuating forces. As a result, the ejector needs to be provided with a high mechanical strength for being able of withstanding such high actuating forces and avoiding excessive wear. This, however, affects cost and weight of the vehicle.

To that end, dump trucks are known, e.g. from US 5,456,521 A1, in which a pivotable dump body is combined with an ejector arrangement. However, due to the increased number of components, the weight of the dump body arrangement may be significantly increased, thereby substantially affecting stability and operational safety of the dump truck during operation.

Further technical background is known from US 3 827 753 A, US 2014/159466 A1, CN 206 870 921 U, US 5 456 521 A, US 2019/291623 A1, DE 12 20 747 B and EP 20 090 461 A1.

### Summary

Embodiments of the present disclosure provide a dumping-body assembly for use in a haulage vehicle, which in particularly has a weight optimized design and, at the same time, contributes to an improved operational safety of the vehicle. Some embodiments of the present disclosure provide a haulage vehicle which is equipped with such a dumping-body assembly.

Some embodiments provide a dumping-body assembly for use in a haulage vehicle, in particular a dump truck, is provided, which comprises a dump body configured for being pivotably mounted to a carrier of the vehicle, an ejecting unit configured to move an ejector in the dump body for unloading a payload, a pivoting unit configured to, in a mounted state of the dumping-body assembly on the vehicle, pivot the dump body relative to the carrier between a stowage end position and an unloading end position, and a sensor unit configured to determine pivot state information being indicative of a pivot angle between an actual position of the dump body relative to its stowage end position or its unloading end position. The pivoting unit comprises an actuating means configured for pivoting the dump body relative to the carrier and a control means configured for controlling operation of the actuating means in dependence on the pivot state information to pivot the dump body relative to the carrier by a maximum pivot angle of not more than 40° for positioning the dump body from its stowage end position into its unloading end position.

Furthermore, a haulage vehicle, in particular a dump truck, is provided which is equipped with a dumping-body assembly as described above.

### Brief Description of the Drawings

The present disclosure will be more readily appreciated by reference to the following detailed description when being considered in connection with the accompanying drawings in which:
Figure 1 schematically shows a side view of a dump truck equipped with a dumping-body assembly positioned in a first state;
Figure 2 schematically shows a side view of the dump truck in which the dumping-body assembly is positioned in a second state; and
Figure 3 schematically shows a side view of the dump truck in which the dumping-body assembly is positioned in a third state.

### Description

In the following, the invention will be explained in more detail with reference to the accompanying Figures. In the Figures, like elements are denoted by identical reference numerals and repeated description thereof may be omitted in order to avoid redundancies.

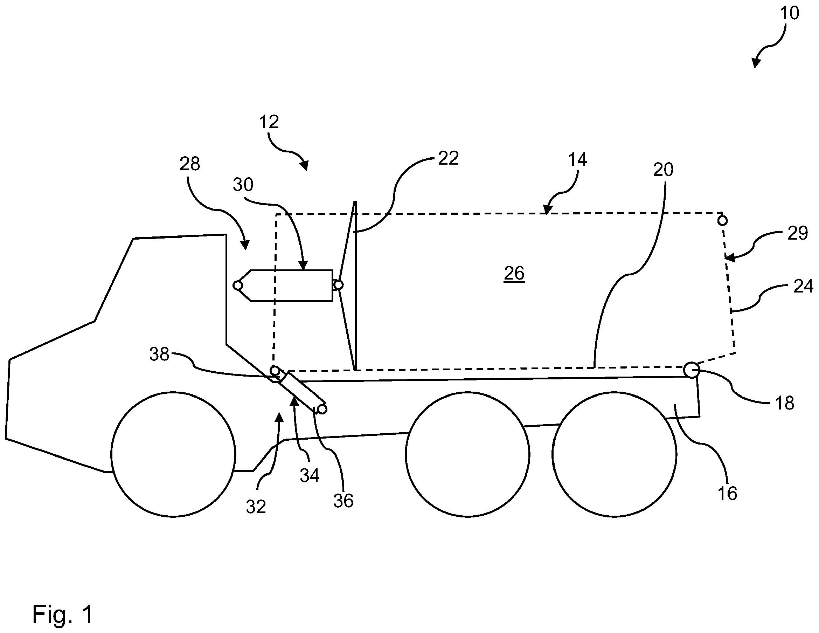

Fig. 1 depicts a haulage vehicle in the form of a dump truck 10 intended for being used in different haulage applications, such as in mines, on construction sites or in landfills. The dump truck 10 is equipped with a dumping-body assembly 12 comprising a pivotable dump body 14 configured for receiving a payload to be transported. In the context of the present disclosure, the term "payload" refers to transport materials or goods to be received and transported by of the dump truck 10, such as bulk material, waste, coal, etc.

The basic structure and basic mode of operation of a dump truck and its components are well known to a person skilled in the art and are thus not further specified. Rather, characteristics of the dumping-body assembly 12 and its operation interlinked with the present invention are addressed and specified in the following.

The dumping body assembly 12 comprises the dump body 14 which, for reasons of a better overview, is transparently depicted in Figs. 1 to 3 as indicated by dashed lines. The dump body 14 is pivotably mounted to a carrier 16 or chassis of the dump truck 10 by means of at least one pivot joint 18. Preferably, two pivot joints 18 are provided on opposing sides of the dump body 14 which are coaxially arranged to one another relative to a pivot axis. By such a configuration, the dump body 14 is pivotable around the pivot axis which passes through the two pivot joints 18 and is arranged in parallel to a transverse axis of the dump truck 10. As can be gathered from Fig. 1, the pivot joint 18 is provided in the region of a rear end of the dump body 14 and the carrier 16. In an alternative configuration, the pivot axis may be arranged in parallel to a longitudinal axis of the dump truck 10. In such an arrangement, the at least one pivot joint 18 may be arranged in the region of one side of the dump truck 10.

Specifically, the dump body 14 may comprises at least one structural interface, i.e. a bracket, constituting a part of the pivot joint 18 which is pivotally connected to a complementary designed structural interface of the carrier 16, i.e. provided in the form of a pivot shaft supported in a frame of the carrier 16.

The dump body 14 comprises a bottom 20, two opposing side walls, a front wall 22 and a rear wall 24 which delimit a loading space 26 of the dump body 14. In the shown configuration, the dump body 14 has an open ceiling or top via which it can be filled with the payload.

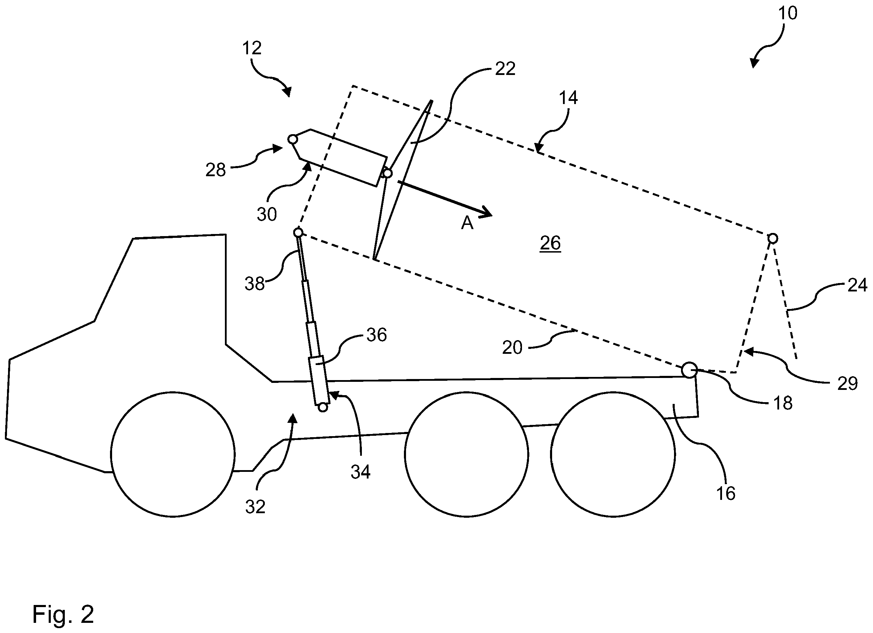

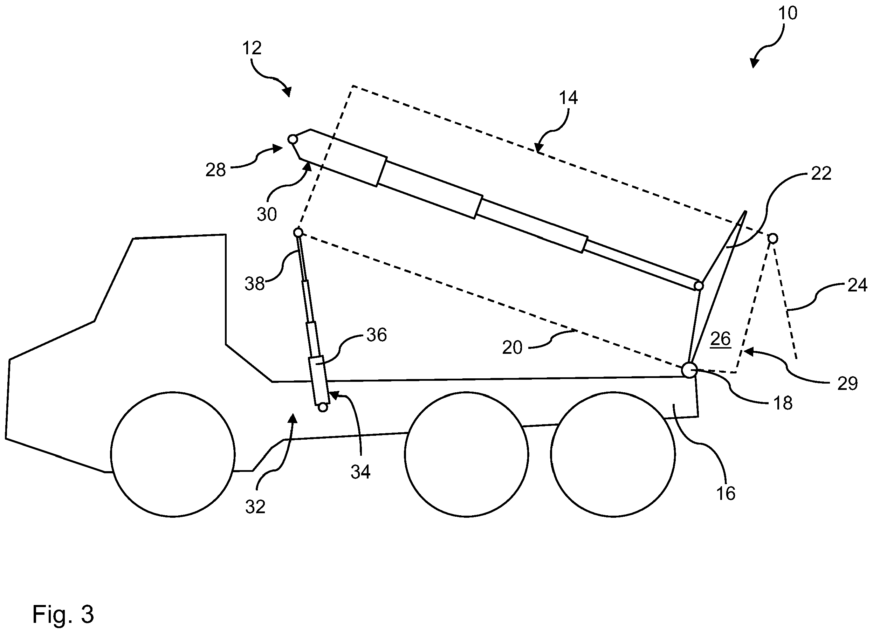

The rear wall 24 of the dump body 14 constitutes an unloading gate. As such, the rear wall 24 is configured to be selectively opened or closed so as to release or cover a rear opening 29 of the dump body 14, via which the payload received in the loading space 26 can be dumped or unloaded from the dump body 14. For doing so, an upper end of the rear wall 24 is hinged-coupled to the side walls of the dump body 14. In this way, upon pivoting the dump body 14 upwardly relative to the carrier 16, the rear wall 24 pivots away from the sidewalls, thereby uncovering the rear opening 29 as can be gathered from Fig. 2 and 3.

Further, at the lower end of the rear wall 24, the dump body 14 is equipped with a locking mechanism (not shown), e.g. provided as a lever/latch mechanism, for selectively coupling the lower end of the rear wall 24 to the side walls of the dump body 14. In this way, pivoting of the rear wall 24 relative to the side walls of the dump body 14 may be selectively allowed or prevented. Specifically, the locking mechanism may be switched between a locked state and an unlocked state. In the locked state, the lower end of the rear wall 24 is structurally coupled to the side walls of the dump body 14 such that a pivoting movement of the rear wall 24 relative to the side walls of the dump body 14 is disabled. In the unlocked state, the lower end of the rear wall 24 is structurally decoupled from the side walls of the dump body 14 such that a pivoting movement of the rear wall 24 relative to the side walls of the dump body 14 is enabled.

The dumping-body assembly 12 further comprises an ejecting unit 28 which is configured to move an ejector 22 in the dump body 14 for unloading the payload received in the dump body 14. Specifically, in the shown configuration, the front wall 22 of the dump body 14 constitutes the ejector of the ejecting unit 28 for unloading the payload from the dump body 14. In other words, the ejector 22 is provided in the form of a movable wall, i.e. the front wall 22, accommodated in the dump body 14 which delimits the loading space 26 of the dump body 14.

In the shown configuration, the front wall 22 is translationally guided within the dump body 14 so as to be movable relative to the dump body 14 between a fully-retracted position, as depicted in Fig. 1 and 2, and a fully-extended position, as depicted in Fig. 3. For actuating the front wall 22, the ejecting unit 28 comprises at least one first cylinder-piston unit 30 configured for moving the front wall 22 between its fully-extended position and its fully-retracted position. Specifically, as can be gathered from Fig. 3, the first cylinder-piston unit 30 is provided with a multi-stage telescopic cylinder, within which a piston is translationally guided and moved. Preferably, the first cylinder-piston unit 30 is pneumatically or hydraulically driven.

The dumping-body assembly 12 further comprises a pivoting unit 32 which is configured to pivot the dump body 14 relative to the carrier 16 between a stowage end position and an unloading end position. In the context of the present disclosure, the term "end position" refers to a position of the dump body 14 relative to the carrier 16, beyond which the dump body 14 cannot be moved or pivoted. In other words, in the shown configuration, the dump body 14 may be selectively and arbitrarily pivoted between the stowage end position and the unloading end position, but cannot be moved or pivoted beyond this moving space spanned and limited by the stowage end position and the unloading end position.

Further, the term "stowage end position" refers to a position of the dump body 14 relative to the carrier 16 in which the dump body 14 is positioned during a loading operation, i.e. when the dump truck 10 is loaded with payload, or during a transporting operation of the dump truck 10, i.e. when the dump truck 10 transports the received payload to a delivery site. Fig. 1 depicts a state of the dump truck 10 in which the dump body 14 is positioned into its stowage end position.

The term "unloading end position" refers to a position of the dump body 14 relative to the carrier 16 in which the dump body 14 is positioned during an unloading operation, i.e. when the payload received in the loading space 26 is unloaded from the dump body 14. Figs. 2 and 3 depict a state of the dump truck 10 in which the dump body 14 is positioned into its unloading end position.

In the shown configuration, the pivoting unit 32 is configured to pivot the dump body 14 relative to the carrier 16 by a maximum pivot angle of not more than 40° for positioning the dump body 14 from its stowage end position into its unloading end position, and vice versa. In other words, upon being pivoted from its stowage end position into its unloading end position, the dump body 14 is pivoted around the pivot joint 18 by the maximum pivot angle. Specifically, in the shown configuration, the maximum pivot angle is 20°. In other words, starting from its stowage end position, the dump body 14 cannot be pivoted by more than 20° around the pivot axis which passes through the pivot joint 18. Alternatively, the maximum pivot angle may be between 20° and 40°, e.g. 25° or 30° or 35°.

In the shown configuration, the pivoting unit 32 is configured to limit the pivoting movement of the dump body 14 relative to the carrier 16 to the maximum pivot angle. Specifically, the pivoting unit 32 is configured to functionally limit the pivoting movement of the dump body 14 relative to the carrier 16 as will be set forth in the following.

The pivoting unit 32 comprises an actuating means 34 for pivoting the dump body 14 relative to the carrier 16 and a control means (not shown), such as an electronic control unit, for controlling operation of the actuating means 34. Further, the control means is configured for controlling operation of the ejecting unit 28.

Specifically, the actuating means is provided in the form of at least one second cylinder-piston unit 34 having a multi-stage telescopic cylinder 36 as can be gathered from Fig. 2 and 3. An end section of the cylinder 36 is hinged-coupled to the carrier 16 and an end section of a piston 38 of the actuating means 34 is hinged-coupled to a lower front end of the dump body 14. In other words, the second cylinder-piston unit 34 has a first end section pivotably mounted to the dump body 14 and a second end section pivotably mounted to the carrier 16.

In this configuration, the actuating means 32 is configured to exert an actuating force or actuating torque on the dump body 14 so as to lift or lower the front end of the dump body 14, thereby pivoting the dump body 14 around the pivot hinge 18 relative to the carrier 16. Preferably, the piston-cylinder unit 34 is pneumatically or hydraulically driven.

The dumping-body assembly 12, particularly the pivoting unit 32, is designed and configured such that a translational movement of the piston 38 relative to the cylinder 36 of the cylinder-piston unit 34 is transformed into a rotational movement of the dump body 14 relative to the carrier 16 and around the pivot hinge 18. In this configuration, the control means is configured to actuate the cylinder-piston unit 34 to move the piston 38 into an extended position relative to the cylinder 36 in order to pivot the dump body 14 into its unloading end position as depicted in Fig. 2 and 3. Accordingly, the control means is configured to actuate the cylinder-piston unit 32 to move the piston into a retracted position relative to the cylinder 36 in order to pivot the dump body 14 into its stowage end position as depicted in Fig. 1.

Specifically, in the shown configuration, the piston-cylinder unit 34 is designed and provided such that the extended position of the piston 38 as depicted in Fig. 2 and 3 constitutes a fully-extended position of the piston 38 relative to the cylinder 36. The fully-extended position of the piston 38 constitutes an end position thereof. This means that the piston 38 cannot be extended beyond this position. In this way, the pivoting unit 12, by the structural configuration of the actuating means 34, is configured to limit, i.e. structurally limit, the pivoting movement of the dump body 14 relative to the carrier 16.

Further, the piston-cylinder unit 34 is designed and provided such that the retracted position of the piston 38 as depicted in Fig. 1 constitutes a fully-retracted position of the piston 38 relative to the cylinder 36. The fully-retracted position of the piston 38 may constitute an end position thereof. This means that the piston 38 cannot be retracted beyond this position.

The control means is configured to limit an extraction movement of the piston 38 relative to the cylinder 36 to the extended position, in particular the fully-extended position, and to limit a retraction movement of the piston 38 relative to the cylinder 36 to the retracted position, in particular the fully-retracted position. In this way, the pivoting unit 32, by the functional configuration of the control means, may be configured to limit, i.e. functionally limit, the pivoting movement of the dump body 14 relative to the carrier 16.

Further, the dumping-body assembly 12 is equipped with a sensor unit (not shown) configured to determine pivot state information being indicative of an actual pivot angle of the dump body 14 relative to the carrier 16. Specifically, the pivot state information is indicative of a pivot angle between an actual position of the dump body 14 relative to the carrier 16. For example, the pivot state information may be indicative of a pivot angle between the actual position of the dump body 14 relative to its stowage end position or its unloading end position. In other words, the pivot state information may quantify a pivot angle, by which the dump body 14 is to be pivoted so as to be positioned from its stowage end position or its unloading end position into the actual position of the dump body 14.

Further, the sensor unit is configured to transmit the pivot state information to the control means which is configured to actuate or operate the actuating means 34 and the ejecting unit 28 in dependence on the received pivot state information. In this way, the control means may control operation of the actuating means 34 based on a feedback loop so as to ensure proper operation of the dump body 14. Specifically, the control means may be configured to prevent the dump body 14 from being upwardly pivoted relative to the carrier 16 when the received state information indicate that the dump body 14 is positioned into its unloading end position. Further, the control means may be configured to allow for upwardly pivoting the dump body 14 relative to the carrier 16 when the received pivot state information indicate that the dump body 14 has not reached its unloading end position.

Still further, the control means may be configured to prevent the ejecting unit 28 from positioning its ejector 22 into the extended position when the received state information indicate that the dump body 14 is not positioned into its unloading end position. In this way, the amount of an actuating force to be exerted onto the ejector 22, i.e. required for properly unloading the payload from the dump body 14, may be reduced.

Alternatively, the control means may be configured to control the ejecting unit 28 and the pivoting unit 32 such that the dump body 14 is pivoted between its stowage end position and its unloading end position, while the ejector 22 is moved between its retracted and its extended position.

In the following, the operation of the dump truck 10 is addressed. In a first state of the dump truck 10 as depicted in Fig. 1, the control means controls the operation of the ejecting unit 28 and the pivoting unit 32 such that the front wall 22 is positioned into its fully-retracted position and the dump body 14 is positioned into its stowage end position. Further, the locking mechanism is positioned into its locked state so as to fix the rear wall 24 to the side walls of the dump body, thereby preventing the rear opening 29 from being unintendedly uncovered during operation. In this first state, the dump truck 10 is intended to be loaded with the payload and to move the loaded payload to a site of delivery.

When arriving at the site of delivery, the dump truck 10 is set into a second state as depicted in Fig. 2. In this second state, the control means controls the operation of the ejecting unit 28 and the pivoting unit 32 such that the front wall 22 is maintained into its fully-retracted position and the dump body 14 is positioned into its unloading end position. Further, the locking mechanism is positioned into its unlocked state so as to release the lower end of the rear wall 24 from the side walls of the dump body 14. In this way, upon pivoting the dump body 14 into its unloading end position, the rear wall 24 is pivoted away from the side walls of the dump body 14, thereby uncovering the rear opening 29 and enabling that the payload is unloaded from the dump body 14.

Then, the dump truck 10 is set into a third state as depicted in Fig. 3 for unloading the payload from the dump body 14. In the third state, the control means controls operation of the pivoting unit 32 such that the dump body 14 is maintained into its unloading end position. Further, the control means controls operation of the ejecting unit 28 such that the front wall 22 is moved from its fully-retracted position into its fully-extracted position as indicated by an arrow A in Fig. 2.

It will be obvious for a person skilled in the art that these embodiments and items only depict examples of a plurality of possibilities. Hence, the embodiments shown here should not be understood to form a limitation of these features and configurations. Any possible combination and configuration of the described features can be chosen according to the scope of the invention.

This is in particular the case with respect to the following optional features which may be combined with some or all embodiments, items and search all features mentioned before in any technically feasible combination.

A dumping-body assembly for use in a haulage vehicle, in particular a dump truck, may be provided. The dumping-body assembly may comprise a dump body configured for being pivotably mounted to a carrier of the vehicle, an ejecting unit configured to move an ejector in the dump body for unloading a payload received in the dump body, and a pivoting unit which is configured to, in a mounted state of the dumping-body assembly on the vehicle, pivot the dump body relative to the carrier between a stowage end position and an unloading end position. Specifically, the pivoting unit may be configured to pivot the dump body relative to the carrier by a maximum pivot angle of not more than 40° for positioning the dump body from its stowage end position into its unloading end position.

In other words, in the mounted state of the dumping-body assembly on the vehicle, the pivoting unit is configured to limit the pivoting movement of the dump body relative to the carrier to the maximum pivot angle. Accordingly, the dumping-body assembly may be provided with a structural or function configuration so as to prevent the dump body from being pivoted relative to the carrier by more than the maximum pivot angle for positioning the dump body from its stowage end position into its unloading end position, and vice versa. The maximum pivot angle may be less than 40°, in particular between 20° to 40°. Alternatively, the maximum pivot angle may be less than 30°, in particular between 20° to 30°. The pivot angle may be any one of 40°, 35°, 30°, 25° and 20°.

By being provided with the pivoting unit which limits the pivoting movement of the dump body relative to the vehicle, the proposed dumping-body assembly may prevent that a center of gravity of a vehicle being equipped with the proposed dumping-body assembly is raised to an extent during operation which may hazardously affect stability and thus operational safety of the vehicle.

Further, by combining a pivotable dump body with an ejecting unit, the proposed dumping-body assembly does not require that the dump body needs to be pivoted upwardly from its stowage end position by a pivot angle more than 40° for ensuring proper unloading of the payload. This is achieved by using both gravity and the ejecting unit for unloading the payload received in the dump body. Thus, compared to known rear eject body arrangements, the ejecting unit may be subjected to substantially lower actuating forces since, in the proposed solution, unloading of the payload is supported by gravity. As a result, compared to the known rear eject body arrangements, in which the ejector is moved while the payload container maintains in a horizontal position, the proposed solution enables to reduce power for actuating the ejector, structural loading of the ejector and wear of the ejector during operation. In this way, lower mechanical strength requirements may be demanded, thereby enabling to provide the ejecting unit with a weight-optimized design. Further, since the proposed dumping-body assembly is not intended for pivoting the dump body by more than 40°, the proposed solution further supports a weight-optimized design of the pivoting unit.

The proposed dumping-body assembly may be employed in any suitable haulage vehicle used in different haulage applications, such as in mines, on construction sites or in landfills. For example, the proposed dumping-body assembly may be intended for being used in a dump truck, but is not limited to this application.

When being employed in a dump truck, the proposed dumping-body assembly may be intended and configured for being mounted to a carrier or chassis of the dump truck. Specifically, as set forth above, the dumping-body assembly may comprise a dump body forming a loading space for receiving a payload to be transported. The dump body may be configured for being pivotably mounted to the carrier or chassis of the dump truck by means of at least one pivot joint. Accordingly, the dump body may comprise a structural interface which forms at least a part of the pivot joint for pivotably connecting the dump body to the carrier. Specifically, the structural interface of the dump body may be designed complementary to a further structural interface provided at the carrier such that the structural interface of the dump body and the further structural interface of the carrier form, i.e. together form, the at least one pivot joint.

In the mounted state of the dumping-body assembly, the structural interface may be provided in the region of a rear end of the vehicle. Further, the pivot joint may be provided so as to define a pivot axis around which the dump body is pivotable so as to be moved between its stowage end position and its unloading end position. In particular, the pivot axis may be arranged in parallel to a transverse axis of the vehicle. Alternatively, the pivot axis may be arranged in parallel to a longitudinal axis of the vehicle.

As set forth above, the dumping-body assembly may further comprise the ejecting unit including the ejector which is provided to be movable within the dump body. Specifically, the ejecting unit is provided such that, upon moving the ejector from a front end position to a rear end position in the dump body, a payload received in the dump body may be unloaded therefrom. In this configuration, the ejector may delimit the loading space of the dump body. Accordingly, upon moving the ejector, the loading space of the dump body may be manipulated, i.e. increased or decreased. In this configuration, decreasing the loading space upon moving the ejector within the dump body may cause unloading of the payload from the dump body. Accordingly, in the front end position, the dump body may be provided with a maximum loading space and ,in the rear end position, the dump body may be provided with a minimum loading space.

For example, the ejecting unit may be provided such that the ejector is translationally movable and guided within the dump body so as to be moved relative to the dump body between a retracted position, particularly the front end position, and an extended position, particularly the rear end position.

For moving the injector, the ejecting unit may be provided with an actuating unit, particularly in the form of at least one cylinder-piston unit, which is configured to move, particularly translationally move, the ejector between the retracted position and the extended position.

In a further development, the ejector may be provided in the form of a movable wall, in particular a front wall or a side wall, of the dump body. The movable wall may be accommodated in the dump body and may delimit the loading space. For doing so, the movable wall may be supported by and guided on rails arranged on a bottom of the top body.

As set forth above, the dumping-body assembly may further comprise the pivoting unit which is configured to pivot the dump body relative to the carrier of the vehicle between the stowage end position and the unloading end position. The pivoting unit may comprise an actuating means for pivoting the dump body relative to the carrier. Specifically, the actuating means may be provided in the form of at least one cylinder-piston unit having a piston configured to be translationally moved within a cylinder. In a further development, the cylinder-piston unit may have a multi-stage telescopic cylinder.

The pivoting unit, i.e. its cylinder-piston unit, may be configured and designed such that, in the mounted state of the dumping-body assembly on the vehicle, a translational movement of the piston relative to the cylinder of the cylinder-piston unit is transformed into a rotational movement of the dump body relative to the carrier. For doing so, the cylinder-piston unit may have a first end section pivotably mounted to the dump body and a second end section configured to be pivotably mounted to the carrier of the vehicle.

More specifically, in such a configuration of the pivoting unit, the control means may be configured to actuate the cylinder-piston unit to move the piston into an extended position relative to the cylinder in order to pivot the dump body into its unloading end position and to move the piston into an retracted position relative to the cylinder in order to pivot the dump body into its stowage end position, or vice versa.

Specifically, in this configuration, the extended position of the piston may constitute a fully-extended position of the piston relative to the cylinder. In this way, the pivoting unit, based on its structural configuration, may delimit a maximum pivot angle and thus may structurally limit the pivoting movement of the dump body. Further, the retracted position may constitute a fully-retracted position of the piston relative to the cylinder.

In a further development, the control means of the pivoting unit may be configured to limit an extraction movement of the piston relative to the cylinder to the extended position and to limit a retraction movement of the piston relative to the cylinder to the retracted position. In this way, the control means may be configured, based on its functional implementation, to delimit a maximum pivot angle.

Further, the dumping-body assembly may comprise a sensor unit configured to determine pivot state information being indicative of a pivot angle between an actual position of the dump body relative to the stowage end position or the unloading end position. In other words, the pivot state information may quantify a pivot angle, by which the dump body is to be pivoted so as to be positioned from its stowage end position or its unloading end position into the actual position of the dump body.

The control means may be configured to actuate the actuating means in dependence on the pivot state information. Specifically, the control means may be configured to allow for actuating the actuating means so as to increase a pivot angle between the actual position of the dump body relative to the stowage end position when the pivot state information indicates that an actual position of the dump body has not reached the unloading end position. Further, the control means may be configured to prevent an actuation of the actuating means which would cause an increase of the pivot angle between the actual position of the dump body relative to the stowage end position when the pivot state information indicates that the actual position of the dump body has reached the unloading end position.

Furthermore, a haulage vehicle, in particular a dump truck may be provided which is equipped with a dumping-body assembly as described above. Accordingly, technical features which are described in connection with the above dumping-body assembly may also relate and be applied to the proposed haulage vehicle, and vice versa.

### Industrial Applicability

With reference to the Figures, a dumping-body assembly and a haulage vehicle being equipped with such an assembly are suggested. The suggested dumping-body assembly as mentioned above is applicable in any suitable haulage vehicle, such as a dump truck. Further, the dumping-body assembly may replace conventional dumping-body assemblies and may serve as a replacement or retrofit part.

## Claims

1. Dumping-body assembly (12) for use in a haulage vehicle (10), in particular a dump truck, comprising:
a dump body (14) configured for being pivotably mounted to a carrier (16) of the vehicle (10),
an ejecting unit (28) configured to move an ejector (22) in the dump body (14) for unloading a payload, and
a pivoting unit (32) configured to, in a mounted state of the dumping-body assembly (12) on the vehicle (12), pivot the dump body (14) relative to the carrier (16) between a stowage end position and an unloading end position, wherein the pivoting unit (32) comprises an actuating means (34) configured for pivoting the dump body (14) relative to the carrier (16) and a control means,
**characterized in that**
the dumping-body assembly (12) further comprises a sensor unit configured to determine pivot state information being indicative of a pivot angle between an actual position of the dump body (14) relative to its stowage end position or its unloading end position, and
the control means is configured for controlling operation of the actuating means (34) in dependence on the pivot state information to pivot the dump body (14) relative to the carrier (16) by a maximum pivot angle of not more than 40° for positioning the dump body (14) from its stowage end position into its unloading end position.

2. Dumping-body assembly according to claim 1, wherein in the mounted state of the dumping-body assembly (12), the pivoting unit (32) is configured to limit the pivoting movement of the dump body (14) relative to the carrier (16) to the maximum pivot angle.

3. Dumping-body assembly according to claim 1 or 2, wherein the maximum pivot angle is between 20° to 40°.

4. Dumping-body assembly according to any one of claims 1 to 3, wherein the dump body (14) comprises a structural interface which forms a pivot joint (18) for pivotably connecting the dump body (14) to the carrier (16).

5. Dumping-body assembly according to claim 4, in which the pivot joint (18) defines a pivot axis around which the dump body (14) is pivotable relative to the carrier (16) so as to be moved between its stowage end position and its unloading end position, wherein the pivot axis is arranged in parallel to a transverse axis of the vehicle (10).

6. Dumping-body assembly according to any one of claims 1 to 5, wherein the ejector (22) of the ejecting unit (28) is translationally guided within the dump body (14) so as to be movable relative the dump body (14) between a retracted position and an extended position.

7. Dumping-body assembly according to any one of claims 1 to 6, wherein the ejector is provided in the form of a movable wall (22) which is accommodated in the dump body (14) and which delimits a loading space (26) of the dump body (14).

8. Dumping-body assembly according to any one of claims 1 to 7, in which the actuating means is provided in the form of at least one cylinder-piston unit (34) and the pivoting unit (32) is designed such that, in the mounted state of the dumping-body assembly (12), a translational movement of a piston (38) relative to a cylinder (36) of the cylinder-piston unit (34) is transformed into a rotational movement of the dump body (14) relative to the carrier (16).

9. Dumping-body assembly according to claim 8, wherein the cylinder-piston unit (34) has a first end section pivotably mounted to the dump body (14) and a second end section configured to be pivotably mounted to the carrier (16) of the vehicle (10).

10. Dumping-body assembly according to claim 8 or 9, wherein the control means is configured to actuate the cylinder-piston unit (34) to move the piston (38) into an extended position relative to the cylinder (36) in order to pivot the dump body (14) into its unloading end position and to move the piston (38) into an retracted position relative to the cylinder (36) in order to pivot the dump body (14) into its stowage end position.

11. Dumping-body assembly according to claim 10, wherein the cylinder-piston unit (34) is designed such that the extended position constitutes a fully-extended position of the piston (38).

12. Dumping-body assembly according to any one of claims 1 to 11, wherein the control means is configured to limit an extraction movement of the piston (38) relative to the cylinder (36) to the extended position and to limit a retraction movement of the piston (38) relative to the cylinder to the retracted position.

13. Haulage vehicle (10), in particular a dump truck, comprising a dumping-body assembly (12) according to any one of claims 1 to 12.

## Patentansprüche

1. Kipperaufbauanordnung (12) zur Verwendung in einem Transportfahrzeug (10), insbesondere einem Muldenkipper, umfassend:
einen Kippaufbau (14), der konfiguriert ist, um an einem Träger (16) des Fahrzeugs (10) schwenkbar montiert zu werden,
eine Auswerfereinheit (28), die konfiguriert ist, um einen Auswerfer (22) in dem Kippaufbau (14) zum Entladen einer Nutzlast zu bewegen, und
eine Schwenkeinheit (32), die konfiguriert ist, um in einem montierten Zustand der Kipperaufbauanordnung (12) auf dem Fahrzeug (12) den Kippaufbau (14) relativ zu dem Träger (16) zwischen einer Verstauendposition und einer Entladeendposition zu schwenken, wobei die Schwenkeinheit (32) ein Betätigungsmittel (34), das konfiguriert ist, um den Kippaufbau (14) relativ zu dem Träger (16) zu schwenken, und ein Steuermittel umfasst,
**dadurch gekennzeichnet, dass**
die Kipperaufbauanordnung (12) ferner eine Sensoreinheit umfasst, die konfiguriert ist, um Schwenkzustandsinformationen zu bestimmen, die einen Schwenkwinkel zwischen einer tatsächlichen Position des Kippaufbaus (14) relativ zu seiner Verstauendposition oder seiner Entladeendposition angeben, und
das Steuermittel zum Steuern des Betriebs des Betätigungsmittels (34) in Abhängigkeit von den Schwenkzustandsinformationen konfiguriert ist, um den Kippaufbau (14) relativ zu dem Träger (16) um einen maximalen Schwenkwinkel von nicht mehr als 40° zu schwenken, zum Positionieren des Kippaufbaus (14) aus seiner Verstauendposition in seine Entladeendposition.

2. Kipperaufbauanordnung nach Anspruch 1, wobei, in dem montierten Zustand der Kipperaufbauanordnung (12), die Schwenkeinheit (32) konfiguriert ist, um die Schwenkbewegung des Kippaufbaus (14) relativ zu dem Träger (16) auf den maximalen Schwenkwinkel zu begrenzen.

3. Kipperaufbauanordnung nach Anspruch 1 oder 2, wobei der maximale Schwenkwinkel zwischen 20° und 40° beträgt.

4. Kipperaufbauanordnung nach einem der Ansprüche 1 bis 3, wobei der Kippaufbau (14) eine strukturelle Schnittstelle umfasst, die ein Schwenkgelenk (18) zum schwenkbaren Verbinden des Kippaufbaus (14) mit dem Träger (16) ausbildet.

5. Kipperaufbauanordnung nach Anspruch 4, bei der das Schwenkgelenk (18) eine Schwenkachse definiert, um die der Kippaufbau (14) relativ zu dem Träger (16) schwenkbar ist, um zwischen seiner Verstauendposition und seiner Entladeendposition bewegt zu werden, wobei die Schwenkachse parallel zu einer Querachse des Fahrzeugs (10) angeordnet ist.

6. Kipperaufbauanordnung nach einem der Ansprüche 1 bis 5, wobei der Auswerfer (22) der Auswerfereinheit (28) innerhalb des Kippaufbaus (14) translatorisch geführt ist, um relativ zu dem Kippaufbau (14) zwischen einer eingefahrenen Position und einer ausgefahrenen Position beweglich zu sein.

7. Kipperaufbauanordnung nach einem der Ansprüche 1 bis 6, wobei der Auswerfer in der Form einer beweglichen Wand (22) bereitgestellt ist, die in dem Kippaufbau (14) untergebracht ist und die einen Laderaum (26) des Kippaufbaus (14) begrenzt.

8. Kipperaufbauanordnung nach einem der Ansprüche 1 bis 7, bei der das Betätigungsmittel in der Form von mindestens einer Zylinder-Kolben-Einheit (34) bereitgestellt ist und die Schwenkeinheit (32) derart gestaltet ist, dass in dem montierten Zustand der Kipperaufbauanordnung (12) eine translatorische Bewegung eines Kolbens (38) relativ zu einem Zylinder (36) der Zylinder-Kolben-Einheit (34) in eine Rotationsbewegung des Kippaufbaus (14) relativ zu dem Träger (16) umgesetzt wird.

9. Kipperaufbauanordnung nach Anspruch 8, wobei die Zylinder-Kolben-Einheit (34) einen ersten Endabschnitt, der an dem Kippaufbau (14) schwenkbar montiert ist, und einen zweiten Endabschnitt aufweist, der konfiguriert ist, um an dem Träger (16) des Fahrzeugs (10) schwenkbar montiert zu sein.

10. Kipperaufbauanordnung nach Anspruch 8 oder 9, wobei das Steuermittel konfiguriert ist, um die Zylinder-Kolben-Einheit (34) zu betätigen, um den Kolben (38) in eine ausgefahrene Position relativ zu dem Zylinder (36) zu bewegen, um den Kippaufbau (14) in seine Entladeendposition zu schwenken, und den Kolben (38) in eine eingefahrene Position relativ zu dem Zylinder (36) zu bewegen, um den Kippaufbau (14) in seine Verstauendposition zu schwenken.

11. Kipperaufbauanordnung nach Anspruch 10, wobei die Zylinder-Kolben-Einheit (34) derart gestaltet ist, dass die ausgefahrene Position eine vollständig ausgefahrene Position des Kolbens (38) darstellt.

12. Kipperaufbauanordnung nach einem der Ansprüche 1 bis 11, wobei das Steuermittel konfiguriert ist, um eine Extraktionsbewegung des Kolbens (38) relativ zu dem Zylinder (36) auf die ausgefahrene Position zu begrenzen und eine Einfahrbewegung des Kolbens (38) relativ zu dem Zylinder auf die eingefahrene Position zu begrenzen.

13. Transportfahrzeug (10), insbesondere ein Muldenkipper, umfassend eine Kipperaufbauanordnung (12) nach einem der Ansprüche 1 bis 12.

## Revendications

1. Ensemble benne basculante (12) pour utilisation dans un véhicule de transport (10), en particulier un camion à benne, comprenant :
une benne basculante (14) conçue pour être montée à pivotement sur un support (16) du véhicule (10),
une unité d'éjection (28) conçue pour déplacer un éjecteur (22) dans la benne basculante (14) pour le déchargement d'une charge utile, et
une unité de pivotement (32) conçue pour, dans un état monté de l'ensemble benne basculante (12) sur le véhicule (12), pivoter la benne basculante (14) par rapport au support (16) entre une position finale d'arrimage et une position finale de déchargement, dans lequel l'unité de pivotement (32) comprend un moyen d'actionnement (34) conçu pour pivoter la benne basculante (14) par rapport au support (16) et un moyen de commande,
**caractérisé en ce que**
l'ensemble benne basculante (12) comprend en outre une unité de capteur configurée pour déterminer des informations d'état de pivotement indiquant un angle de pivotement entre une position réelle de la benne basculante (14) par rapport à sa position finale d'arrimage ou sa position finale de déchargement, et
le moyen de commande est configuré pour commander le fonctionnement du moyen d'actionnement (34) en dépendance des informations d'état de pivotement pour pivoter la benne basculante (14) par rapport au support (16) d'un angle maximal de pivotement n'excédant pas 40° pour le positionnement de la benne basculante (14) de sa position finale d'arrimage à sa position finale de déchargement.

2. Ensemble benne basculante selon la revendication 1, dans lequel dans l'état monté de l'ensemble benne basculante (12), l'unité de pivotement (32) est conçue pour limiter le mouvement pivotant de la benne basculante (14) par rapport au support (16) à l'angle maximal de pivotement.

3. Ensemble benne basculante selon la revendication 1 ou 2, dans lequel l'angle maximal de pivotement est compris de 20° à 40°.

4. Ensemble benne basculante selon l'une quelconque des revendications 1 à 3, dans lequel la benne basculante (14) comprend une interface structurelle qui forme une articulation rotoïde (18) permettant de relier de façon pivotante la benne basculante (14) au support (16).

5. Ensemble benne basculante selon la revendication 4, dans lequel l'articulation rotoïde (18) définit un axe de pivotement autour duquel la benne basculante (14) peut pivoter par rapport au support (16) de façon à être déplacée entre sa position finale d'arrimage et sa position finale de déchargement, dans lequel l'axe de pivotement est agencé en parallèle à un axe transversal du véhicule (10).

6. Ensemble benne basculante selon l'une quelconque des revendications 1 à 5, dans lequel l'éjecteur (22) de l'unité d'éjection (28) est guidé en translation au sein de la benne basculante (14) de façon à être mobile par rapport à la benne basculante (14) entre une position rétractée et une position étendue.

7. Ensemble benne basculante selon l'une quelconque des revendications 1 à 6, dans lequel l'éjecteur se présente sous la forme d'une paroi mobile (22) qui est logée dans la benne basculante (14) et qui délimite un espace de chargement (26) de la benne basculante (14).

8. Ensemble benne basculante selon l'une quelconque des revendications 1 à 7, dans lequel le moyen d'actionnement se présente sous la forme d'au moins une unité cylindre-piston (34) et l'unité de pivotement (32) est prévue de telle sorte que, dans l'état monté de l'ensemble benne basculante (12), un mouvement de translation d'un piston (38) par rapport à un cylindre (36) de l'unité cylindre-piston (34) est transformé en un mouvement de rotation de la benne basculante (14) par rapport au support (16).

9. Ensemble benne basculante selon la revendication 8, dans lequel l'unité cylindre-piston (34) a une première section d'extrémité montée à pivotement à la benne basculante (14) et une seconde section d'extrémité conçue pour être montée à pivotement au support (16) du véhicule (10).

10. Ensemble benne basculante selon la revendication 8 ou 9, dans lequel le moyen de commande est conçu pour actionner l'unité cylindre-piston (34) pour déplacer le piston (38) dans une position étendue par rapport au cylindre (36) afin de pivoter la benne basculante (14) dans sa position finale de déchargement et pour déplacer le piston (38) dans une position rétractée par rapport au cylindre (36) afin de pivoter la benne basculante (14) dans sa position finale d'arrimage.

11. Ensemble benne basculante selon la revendication 10, dans lequel l'unité cylindre-piston (34) est prévue de telle sorte que la position étendue constitue une position complètement étendue du piston (38).

12. Ensemble benne basculante selon l'une quelconque des revendications 1 à 11, dans lequel le moyen de commande est conçu pour limiter un mouvement d'extraction du piston (38) par rapport au cylindre (36) à la position étendue et pour limiter un mouvement de rétraction du piston (38) par rapport au cylindre à la position rétractée.

13. Véhicule de transport (10), en particulier un camion à benne, comprenant un ensemble benne basculante (12) selon l'une quelconque des revendications 1 à 12.
